Europäisches Patentamt

European Patent Office

Office européen des brevets

(11) Veröffentlichungsnummer : **0 036 063**
**B1**

# (12) EUROPÄISCHE PATENTSCHRIFT

(45) Veröffentlichungstag der Patentschrift :
29.02.84

(51) Int. Cl.³ : **B 60 R 13/06**, B 60 R 13/04

(21) Anmeldenummer : **81100203.9**

(22) Anmeldetag : **14.01.81**

(54) **Randabdeckung mit Klipsbefestigung für eingeklebte Fahrzeugscheiben.**

(30) Priorität : **15.03.80 DE 3010043**

(43) Veröffentlichungstag der Anmeldung :
**23.09.81 Patentblatt 81/38**

(45) Bekanntmachung des Hinweises auf die Patenterteilung : **29.02.84 Patentblatt 84/09**

(84) Benannte Vertragsstaaten :
**DE FR GB IT SE**

(56) Entgegenhaltungen :
**DE-A- 1 530 749**
**FR-A- 1 565 549**
**GB-A- 997 129**

(73) Patentinhaber : **Gebr. Happich GmbH**
**Postfach 10 02 49 Clausenbrücke 1**
**D-5600 Wuppertal 1 (DE)**

(72) Erfinder : **Treber, Willi O.**
**Voswinckelstr. 12**
**D-5600 Wuppertal 2 (DE)**
Erfinder : **Cziptschirsch Kurt**
**Am Heckendorn 43**
**D-5600 Wuppertal 2 (DE)**

(74) Vertreter : **Rehders, Jochen**
**c/o Fa. Gebr. Happich GmbH Postfach 10 02 49**
**Clausenbrücke 1**
**D-5600 Wuppertal 1 (DE)**

## Randabdeckung mit Klipsbefestigung für eingeklebte Fahrzeugscheiben

Die Erfindung bezieht sich auf eine Randabdeckung mit Klipsbefestigung für eingeklebte Fahrzeugscheiben, wobei ein im Querschnitt V-förmig oder U-förmig ausgebildeter Klips, der im Abstand mit weiteren Klipsen im Bereich des Scheibenrandes angeordnet und von Fahrzeugscheibe und Scheibenaufnahme gehalten ist, seinerseits an mindestens einem Schenkel des Klipses mit einer oder mehreren außenseitig gelegenen Nasen versehen ist, von denen jeweils eine nahe am Scheitel angeordnet ist, eine aufgenommene Fahrzeugscheibe hintergreift, und der Klips weiterhin mit Nasen zur klipsbaren Befestigung der Randabdeckung versehen ist.

Aus der DE-A-1 530 749 ist eine Randabdeckung mit Klipsbefestigung für eingeklebte Fahrzeugscheiben bekannt. Dabei besteht die Randabdeckung aus einer im Querschnitt C-förmig profilierten Leiste, während die Klipse jeweils eine Nase zu ihrer eigenen Montage aufweisen, die eine aufgenommene Fahrzeugscheibe hintergreifen und weiterhin mit Nasen zur klipsbaren Befestigung der Randabdeckung versehen sind. Die Klipse besitzen eine etwa V-förmige oder U-förmige Ausbildung, wobei die freien Schenkelenden jeweils nach Art eines Kneifzangenkopfes zunächst nach außen und dann gegeneinandergerichtet nach innen gebogen sind. Zwischen den gegeneinandergerichteten Schenkelenden befindet sich ein Spalt, der ein Zusammendrücken der Klipsschenkel und damit eine Montage der Randabdeckung durch Aufdrücken derselben auf die nach außen gerichteten Nasen der Klipse zuläßt.

Es ist Aufgabe der Erfindung, eine Randabdeckung mit Klipsbefestigung für eingeklebte Fahrzeugscheiben zu schaffen, welche leicht montierbar ist, den einmal eingenommenen Sitz lagefixiert beibehält und gleichzeitig, ohne besondere konstruktive Maßnahmen ergreifen zu müssen, eine zusammenwirkende Formschlüssigkeit von Klips und Randabdeckung ergibt.

Die Aufgabe wird erfindungsgemäß dadurch gelöst, daß die Randabdeckung einen rückseitigen Steg aufweist und der Klips zwischen seinen Schenkeln eine Stecköffnung für die Aufnahme des an der Randabdeckung angeordneten Steges aufweist, daß zur Halterung des endseitig mit einem Widerhaken versehenen Steges der Randabdeckung der Schenkel des Klipses eine innenseitige Einbuchtung aufweist, und daß der andere Schenkel ein Übermaß im Spreizwinkel gegenüber dem Spreizwinkel beim Einsatz des Klipses aufweist.

Bei der erfindungsgemäßen Ausführung ist es weniger wesentlich, ob der Querschnitt V- oder U-förmig ausgebildet ist. Einen V-förmigen Querschnitt wird man immer dann wählen, wenn der Spalt am Scheibenrand insgesamt gesehen eine geringe Breite aufweist, während eine U-förmige Form wegen der Stegausbildung eben zweckmäßiger für breitere Spalte ist. Diese Querschnittsformen sind jedoch sehr variabel einsetzbar ; ein U- bzw. V-förmiger Klips setzt immer federnde Schenkel voraus, die infolge ihres Federweges auch größere Toleranzen überbrücken und damit für verschiedene Spaltbreiten verwendbar sind. Verschiedene Spaltbreiten treten nicht nur von der Konstruktion her auf, sie sind auch durch die sich zwangsläufig ergebenden Fertigungstoleranzen von Fahrzeugscheibe und Scheibenaufnahme bedingt und auch, wie weitgehend zentriert die Scheibe in ihrer Aufnahme eingeklebt ist. Als wesentliches Konstruktionsmerkmal sind eine oder auch mehrere Nasen anzuführen, die an dem der Fahrzeugscheibe zugelegenen Schenkel des Klipses angeordnet sind und die eingeklebte Scheibe hintergreifen, so daß eine formschlüssige Verbindung von Fahrzeugscheibe und Klips gebildet ist.

Der Klips selbst erhält seinen allgemeinen festen und den bei der Montage auftretenden Kräften widerstehenden Sitz durch die Fahrzeugscheibe. Erfindungsgemäß ist nämlich von einer eingeklebten Scheibe ausgegangen. Die Klebverbindung ist erfahrungsgemäß sicher haltend und weil sie ein Stück von der Kante der Fahrzeugscheibe zu ihrem Mittelpunkt hin angeordnet ist, ist eine umlaufende Nut gebildet, in die die Nasen des Klipses behinderungs- und angriffsfrei ihren dauerhaften Sitz erhalten. Anzuführen zum festen Sitz des Klipses ist noch die Spreizung, die zumindest vorwiegend von dem der Fahrzeugscheibe abgelegenen Schenkel des Klipses ausgeht, der sich am Rand der Scheibenaufnahme abstützt.

Da es sich nicht nur beim Klips, sondern auch beim Einsatzgegenstand, dem Fahrzeug, um einen Massenartikel handelt, ist es zweckmäßig, den Klips mit speziellen Größen auszubilden. Beispielsweise, indem ein Schenkel des Klipses eine Nase aufweist, deren wirksame, die Scheibe hintergreifende Fläche vom Scheitel des Klipses aus in einem projiziert senkrechten Abstand angeordnet ist, der dem Abstand von Fahrzeugscheibe zur Grundfläche der Scheibenaufnahme entspricht oder aber eine geringere, dem Abstand entsprechende Größe aufweist. Eine derartig auf die jeweiligen Größenverhältnisse abgestellte Ausbildung des Klipses ergibt noch mehr Sicherheit für einen guten Sitz und auch für eine einfacher durchführbare Montage, als wenn Varianten mit eingebaut sind.

Die vorerwähnten Vorteile einer speziellen Ausbildung des Klipses für bestimmte Größen werden nicht gemindert, wenn ein Schenkel des Klipses zwei Nasen aufweist, die in Schenkelrichtung im Abstand zueinander angeordnet sind, derart, daß wahlweise eine dickere oder dünnere Fahrzeugscheibe hintergriffen wird. Denn die Nasen weisen eine bestimmte Plazierung auf, die dem speziellen Einsatz unterschiedlich dicker Fahrzeugscheiben dienen. So ist es möglich, die ganz allgemein dicker ausgebildete Frontscheibe und die ebenso allgemein dünner ausgebildete Heckscheibe bei gleichgestalteter Scheibenaufnahme mit nur einer Klipsausführung festzulegen, so daß die Herstellung und Bereitstellung von unterschiedlichen Klipsen entfällt.

Der Klips benötigt neben Ausbildungen zu seiner eigenen Befestigung auch solche zur klipsbaren Aufnahme der Randabdeckung. Dies geschieht in besonders einfacher Weise, wenn mindestens eine Nase aus einer Verformung von im Querschnitt gleichbleibenden Schenkeln gebildet ist und die dadurch auf der anderen Seite gebildete Einbuchtung demnach eine Aufnahme für die Randabdeckung ist.

Auch kann es von Vorteil sein, daß ein Schenkel des Klipses eine nach auswärts ausgestellte federnde Lasche aufweist. Durch eine solche Ausbildung können größere Breitentoleranzen des Aufnahmespaltes ausgeglichen und/oder die Anlagefläche des Klipses vergrößert werden, weil nämlich der Schenkel und die ausgestellte Lasche zum Tragen kommen.

Bisher ist davon ausgegangen, daß die Einstecktiefe des Klipses nicht durch einen Anschlag am Klips begrenzt, lediglich, daß die Begrenzung durch Anlage des Klipses auf dem Grund der Scheibenaufnahme gebildet ist. Um von Willkür und anderen Konstruktionsgegebenheiten unabhängig zu sein, empfiehlt es sich, wenn mindestens ein Schenkel des Klipses in seinem auslaufenden Ende eine nach auswärts gerichtete Nase aufweist, die eine Begrenzung der Einstecktiefe des Klipses durch Anlage an der Oberfläche der Fahrzeugscheibe bildet.

In einer weiteren vorteilhaften Ausbildung weist der Klips einen größeren mit der Fahrzeugscheibe zusammenwirkenden Schenkel und einen kürzeren Schenkel auf, welcher sich im tiefgelegenen Bereich der Aufnahme für die Randabdeckung abstützt. Mit dieser Ausbildung wird in einfacher Weise eine doppelte Abstützung für den Klips erreicht, nämlich einmal die Abstützung durch den eigenen, wenn auch kürzeren Schenkel, zum andern durch das in den Spalt einragende Befestigungsprofil der Randabdeckung, das an einer Seite eine Anlage an der Scheibenaufnahme und an der anderen Seite eine Anlage gegen den länger ausgebildeten Schenkel des Klipses findet.

Auf der Zeichnung ist die Erfindung in mehreren Ausführungsbeispielen in vereinfachter Weise dargestellt. Es zeigen

Figur 1 eine schaubildliche Darstellung eines Klipses,

Figur 2 eine Seitenansicht des Klipses nach Fig. 1, kopfseitig dargestellt und eine Randabdeckung in einer Scheibenaufnahme haltend, und

Figuren 3 und 4 ein weiteres Ausführungsbeispiel in sinngemäß vergleichbarer Darstellung wie Fig. 1 und Fig. 2.

Jeweils generell ist mit 1 ein Klips, mit 2 eine Randabdeckung, mit 3 eine Scheibenaufnahme, als Ausbildung an der Karosserie, mit 4 eine Fahrzeugscheibe und mit 5 ein Klebewulst bezeichnet.

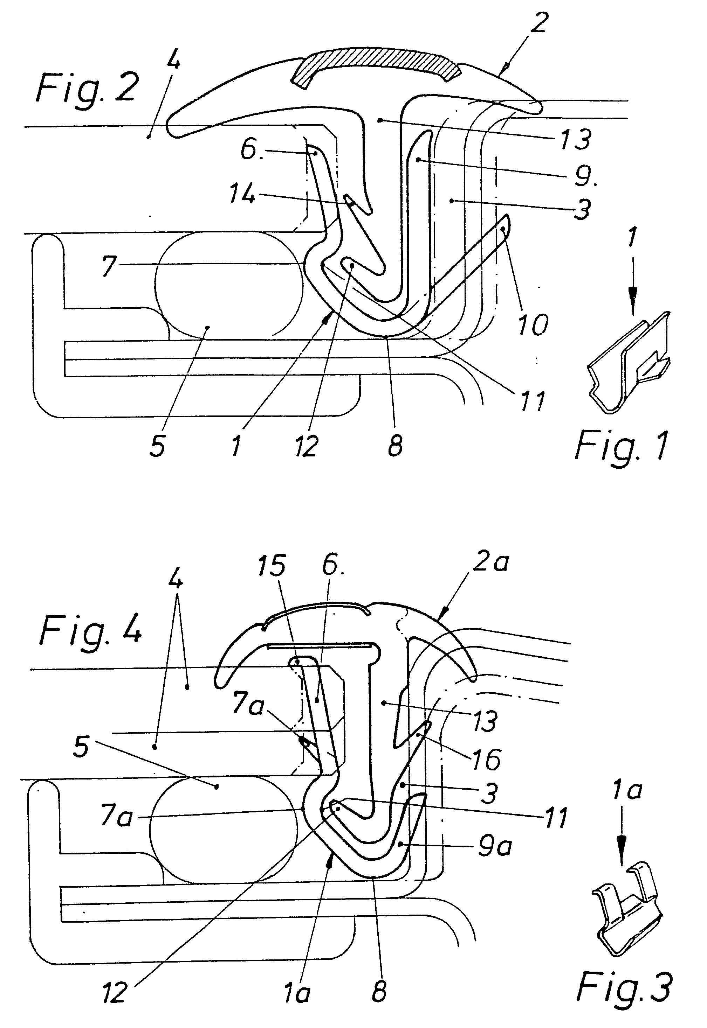

Beim in Fig. 1 bzw. 2 dargestellten Klips 1 kann der Querschnitt als Übergang von einer V-förmigen zur U-förmigen Gestalt bezeichnet werden. Der in Schaurichtung linke Schenkel 6 weist eine Nase 7 auf, welche die Fahrzeugscheibe 4 von der nach innen gelegenen Seite untergreift. Wie aus der Zeichnung klar ersichtlich, ist eine formschlüssige Verbindung gebildet, weil der Klebewulst 5 ein Stück vom freien Rand der Fahrzeugscheibe 4 in Richtung auf die Scheibenmitte hin verlagert ist. Das freie Ende des Schenkels 6 stützt sich am Rand der Fahrzeugscheibe 4 ab. Der Scheitel 8 des Klipses 1 liegt auf dem Grund der Scheibenaufnahme 3 auf und bildet zu einem Stützschenkel 9 einen Übergang. Ebenfalls vom Scheitel 8 des Klipses 1 ausgehend, jedoch schmaler als der Stützschenkel 9 ausgebildet, ist eine federnde Lasche 10 weitgehend ausgestellt angeformt. Diese dient im wesentlichen dem Ausgleich von Toleranzen zwischen Scheibenrand und aufrechter Kante der Scheibenaufnahme 3. Toleranzen, die sich aus unterschiedlichen Größen von Fahrzeugscheibe 4 und Scheibenaufnahme 3 ergeben, sind strichpunktiert dargestellt.

Da der Klips 1 aus einem in der Schichtdicke gleichbleibenden Material hergestellt ist, bildet die Nase 7 auf der anderen, der innenliegenden Seite des Klipses 1 eine Einbuchtung 11, welche im Zusammenwirken mit einer federnden Lasche 12 des in den Klips 1 einragenden Steges 13 der Randabdeckung 2 eine Klipsverbindung mit harpunenartiger Wirkung ergibt, also leichtes Einführen, jedoch schweres Abziehen. Der Steg 13 weist eine weitere Lasche 14 auf, welche kleiner und kürzer ausgebildet ist als die der Klipsverbindung dienende Lasche 12. Sie dient im wesentlichen auch dem Toleranzausgleich bei breiten Spalten, um die sich durch die Breite abbauende Spreizkraft des Klipses 1 zu kompensieren.

Das Ausführungsbeispiel nach den Fig. 3 bzw. 4 zeigt sinngemäß in der Darstellung, wie zu Fig. 1 bzw. Fig. 2 beschrieben, einen Klips 1a. Der in Schaurichtung linke Schenkel weist ebenso wie in Fig. 1 beschrieben eine Nase 7a auf, welche auch rückseitig eine Einbuchtung 11 bildet. Im mittleren Bereich des Schenkels 6 ist jedoch eine zweite Nase 7a angeordnet. Sie ist nicht wie die erste Nase 7a aus einer Verformung des Schenkels 6 gebildet, sondern, wie insbesondere aus Fig. 3 hervorgeht, eine freie Lasche. Die Nasen 7a sind in Schenkelrichtung in einem Abstand voneinander angeordnet, welcher sich aus der Differenz einer dicker und einer dünner ausgebildeten Fahrzeugscheibe 4 ergibt. Durch die doppelte Anordnung der Nasen ist es möglich, wie aus Fig. 4 ersichtlich, eine paßgenaue Befestigung des Klipses 1a an unterschiedlich dick ausgebildeten Fahrzeugscheiben 4 zu erreichen.

Der Schenkel 6 ist bis über die Außenseite der

Scheibe 4 hinaus durchgeführt und weist hier eine nach außen gerichtete Nase 15 auf, die sich auf der Oberfläche der Fahrzeugscheibe 4 abstützt und so eine Tiefenbegrenzung für den Einsatz des Klipses 1a bildet. Der Schenkel 9a des Klipses 1a ist wesentlich kürzer als der Schenkel 9 nach Fig. 1 bzw. 2 ausgebildet, so daß eine größere freie Fläche der aufrechten Wandung der Scheibenaufnahme 3 gebildet ist. Bei der Anwendung des Klipses 1a wird man eine Randabdeckung 2a verwenden, bei der der Steg 13 mit einer Spreizlippe 16 versehen ist. Diese ergänzt nicht nur die nicht immer erreichbare volle Spreizung über einen größeren Toleranzbereich des kürzer ausgebildeten Schenkels 9a, vielmehr erhöht sich die Spreizstärke, insbesondere ist durch die wirkungstechnisch breitere Anlage an der Scheibenaufnahme 3 eine größere und gleichzeitig elastischere Spreizung möglich.

**Ansprüche**

1. Randabdeckung (2, 2a) mit Klipsbefestigung für eingeklebte Fahrzeugscheiben (4), mit einem im Querschnitt V-förmig oder U-förmig ausgebildeter Klips (1, 1a), der im Abstand mit weiteren Klipsen (1, 1a) im Bereich des Scheibenrandes angeordnet und von Fahrzeugscheibe (4) und Scheibenaufnahme (3) gehalten ist und seinerseits an mindestens einem Schenkel (6) des Klipses (1, 1a) mit einer oder mehreren außenseitig gelegenen Nasen (7, 7a) versehen ist, von denen jeweils eine nahe am Scheitel (8) angeordnet ist, und eine eine aufgenommene Fahrzeugscheibe (4) hintergreift, und der Klips weiterhin mit Nasen zur klipsbaren Befestigung der Randabdeckung (2, 2a) versehen ist, dadurch gekennzeichnet, daß die Randabdeckung (2, 2a) einen rückseitigen Steg (13) aufweist und der Klips (1, 1a) zwischen seinen Schenkeln (6, 9, 9a) eine Stecköffnung für die Aufnahme des an der Randabdeckung (2, 2a) angeordneten Steges (13) aufweist, daß zur Halterung des endseitig mit einem Widerhaken (12) versehenen Steges (13) der Randabdeckung (2, 2a) der Schenkel (6) des Klipses (1, 1a) eine innenseitige Einbuchtung (11) aufweist, und daß der andere Schenkel (9, 9a) ein Übermaß im Spreizwinkel gegenüber dem Spreizwinkel beim Einsatz des Klipses (1, 1a) aufweist.

2. Randabdeckung nach Anspruch 1, dadurch gekennzeichnet, daß ein Schenkel (6) des Klipses (1, 1a) eine Nase (7) aufweist, deren wirksame Fläche vom Scheitel (8) des Klipses (1, 1a) aus in einem projiziert senkrechten Abstand angeordnet ist, der dem Abstand von Fahrzeugscheibe (4) zur Grundfläche der Scheibenaufnahme (3) entspricht oder einen geringeren Abstand aufweist.

3. Randabdeckung nach Anspruch 1, dadurch gekennzeichnet, daß ein Schenkel (6) des Klipses (1a) zwei Nasen (7a) aufweist, die in Schenkelrichtung im Abstand zueinander angeordnet sind, derart, daß wahlweise eine dickere oder dünnere Fahrzeugscheibe (4) hintergreifbar ist.

4. Randabdeckung nach einem oder mehreren der vorangehenden Ansprüche, dadurch gekennzeichnet, daß ein Schenkel (9) des Klipses (1) eine nach auswärts ausgestellte federnde Lasche (10) aufweist.

5. Randabdeckung nach einem oder mehreren der vorangehenden Ansprüche, dadurch gekennzeichnet, daß mindestens ein Schenkel (6) des Klipses (1a) in seinem auslaufenden Ende eine nach auswärts gerichtete Nase (15) aufweist, die eine Begrenzung der Einstecktiefe des Klipses (1) durch Anlage an der Oberfläche der Fahrzeugscheibe (4) bildet.

6. Randabdeckung nach Anspruch 1, dadurch gekennzeichnet, daß der Klips (1a) einen größeren mit der Fahrzeugscheibe zusammenwirkenden Schenkel (6) und einen kürzeren Schenkel (9a) aufweist, welcher sich im tiefgelegenen Bereich der Scheibenaufnahme (3) abstützt.

**Claims**

1. A clip-fastenable edge mask (2, 2a) for a bonded vehicle window (4), comprising a clip (1, 1a) which — viewed in cross-section — is V-shaped or U-shaped, which spaced from further clips (1, 1a) is arranged to be located in the region of the window edge and to be held by the vehicle window (4) and a window frame (3) and at least one leg (6) of which is provided with one or more externally disposed lips (7, 7a), the lip, or one of the lips, being positioned in the vicinity of the clip's base (8) and arranged to claw behind the inserted vehicle window (4), the clip also being provided with further lips for clippingly fastening the edge mask (2, 2a), characterized in that the edge mask (2, 2a) is provided with a web (13) extending from its rear face, that the clip (1, 1a) forms with the space enclosed by its legs (6, 9, 9a) a slip-in aperture for receiving the web (13) of the edge mask (2, 2a), that for the purpose of retaining the edge mask's (2, 2a) web (13), which at its free end is provided with a barb (12), the inner face of the one leg (6) of the clip (1, 1a) is formed with a recess (11), and in that the angle of tilt of the other leg (9, 9a) exceeds that of the clip (1, 1a) at insertion.

2. An edge mask according to claim 1, characterized in that the active face of the lip (7) on the one leg (6) of the clip (1, 1a) is spaced from the clip's (1, 1a) base (8) — measured along an imaginary vertical line extending therefrom — at a vertical distance equal to or less than the distance between the vehicle window (4) and the base of the window frame (3).

3. An edge mask according to claim 1, characterized in that the one leg (6) of the clip (1a) is provided with two lips (7a) spaced from one another along the direction of the leg for clawing, selectively, behind a thicker or a thinner vehicle window (4).

4. An edge mask according to any one or more of the preceding claims, characterized in that the other leg (9) of the clip (1) is provided with an outwardly directed resilient tongue (10).

5. An edge mask according to any one or more of the preceding claims, characterized in that at least the one leg (6) of the clip (1a) is provided at its free end with an outwardly directed lip (15) which as a result of contacting the surface of the vehicle window (4) limits the depth to which the clip (1) is insertable.

6. An edge mask according to claim 1, characterized in that the one leg (6) of the clip (1a) is the longer one and serves to interact with the vehicle window and that the other, shorter, leg (9a) is supportable by the lower region of the window frame (3).

**Revendications**

1. Couvre-joint (2, 2a) à fixation par clip pour une vitre de véhicule (4) collée en place, avec un clip (1, 1a) ayant une section en forme de V ou de U disposé à intervalle par rapport à d'autres clips (1, 1a) sur le pourtour de la vitre, ce clip étant retenu par la vitre (4) et par le logement (3) de la vitre et étant pourvu sur au moins une branche (6) du clip (1, 1a) d'un ou plusieurs becs (7, 7a) tournés vers l'extérieur, un de ces becs étant toujours disposé près du sommet (8) du clip et s'accrochant derrière une vitre (4) engagée dans son logement, ce clip étant en outre pourvu de becs pour la fixation du couvrejoint (2, 2a) par agrafage, caractérisé en ce que le couvre-joint (2, 2a) présente une nervure postérieure (13) et le clip (1, 1a) présente entre ses branches (6, 9, 9a) une ouverture pour recevoir la nervure (13) du couvre-joint (2, 2a), la branche (6) du clip (1, 1a) présentant un renfoncement intérieur (11) pour retenir la nervure (13) du couvre-joint (2, 2a), laquelle est pourvue d'un barbillon (12) vers son extrémité, tandis que l'autre branche (9, 9a) présente un surdimensionnement de son angle d'écartement par rapport à l'angle d'écartement lorsque le clip (1, 1a) est mis en place.

2. Couvre-joint selon la revendication 1, caractérisé en ce qu'une branche (6) du clip (1, 1a) présente un bec (7) dont la surface active est disposée par rapport au sommet (8) du clip (1, 1a) à une distance, en projection verticale, correspondant à la distance entre la vitre (4) et le fond du logement (3) de la vitre, ou bien à une distance moindre.

3. Couvre-joint selon la revendication 1, caractérisé en ce qu'une branche (6) du clip présente deux becs (7a) disposés à distance l'un de l'autre le long de la branche, de manière à pouvoir s'accrocher, au choix, derrière une vitre (4) plus épaisse ou plus mince.

4. Couvre-joint selon une ou plusieurs des revendications précédentes, caractérisé en ce qu'une branche (9) du clip (1) présente une languette élastique (10) s'étendant vers l'extérieur.

5. Couvre-joint selon une ou plusieurs des revendications précédentes, caractérisé en ce qu'au moins une branche (6) du clip (1a) présente sur son extrémité tournée vers l'extérieur un bec (15), formant une limitation de la profondeur d'insertion du clip (1) par appui sur la surface extérieure de la vitre (4).

6. Couvre-joint selon la revendication 1, caractérisé en ce que le clip (1a) présente une branche plus grande (6) coopérant avec la vitre du véhicule et une branche plus courte (9a) qui s'appuie dans la région postérieure du logement (3) de la vitre.

Fig. 2

Fig. 1

Fig. 4

Fig. 3